**Europäisches Patentamt**

**European Patent Office**

**Office européen des brevets**

(19)

(11) Numéro de publication : **0 037 789**
**B1**

(12) # FASCICULE DE BREVET EUROPÉEN

(45) Date de publication du fascicule du brevet :
13.06.84

(21) Numéro de dépôt : **81420042.4**

(22) Date de dépôt : **24.03.81**

(51) Int. Cl.³ : **F 16 B  7/04, E 04 G  7/14**

(54) **Raccord pour l'assemblage à 90 degrés, notamment d'organes tubulaires de section ronde.**

(30) Priorité : **04.04.80 FR 8008100**

(43) Date de publication de la demande :
**14.10.81 Bulletin 81/41**

(45) Mention de la délivrance du brevet :
**13.06.84 Bulletin 84/24**

(84) Etats contractants désignés :
**AT BE CH DE GB IT LI LU NL SE**

(56) Documents cités :
**FR-A- 1 024 915**
**FR-A- 2 109 348**
**GB-A-  634 889**

(73) Titulaire : **Giraudet, Bernard**
**Croix Vallier**
**F-42430 Saint-Just en Chevalet (FR)**

(72) Inventeur : **Giraudet, Bernard**
**Croix Vallier**
**F-42430 Saint-Just en Chevalet (FR)**

(74) Mandataire : **Dupuis, François**
**Cabinet Charras 3 Place de l'Hôtel-de-Ville**
**F-42000 St-Etienne (FR)**

Jouve, 18, rue St-Denis, 75001 Paris, France

## Description

L'invention a pour objet un raccord pour l'assemblage à quatre-vingt-dix degrés notamment d'organes tubulaires de section ronde.

L'objet de l'invention se rattache au secteur technique des dispositifs pour bloquer ou assembler des éléments de construction.

Le raccord selon l'invention est généralement employé pour l'assemblage de barres ou tubes de section ronde notamment, en toutes matières ou matériaux métalliques ou non, pour la réalisation d'échafaudages, de rayonnages, de constructions spéciales et autres.

Les buts principaux recherchés sont l'assemblage en croix d'organes, tubulaires de section ronde, à l'aide d'éléments identiques simples, économiques et conformés pour assurer une fixation efficace sans aucune détérioration des dits organes. De plus, la fixation en position doit être règlable facilement et l'on doit pouvoir intercaler et fixer aisément d'autres organes entre les organes tubulaires déjà assemblés.

On a proposé certains types de raccords remplissant plus ou moins les différentes fonctions précitées mais présentant certains inconvénients.

Généralement ces raccords sont d'une conception compliquée ou bien ne permettent pas un assemblage sûr, efficace et rapide : un type de raccord connu, dont les caractéristiques forment le préambule de la revendication 1, est décrit par exemple dans GB-A-634 889.

Le raccord selon l'invention est remarquable par sa facilité d'adaptation sur tous profils tubulaires et est particulièrement performant par une conformation générale qui permet, en combinaison avec un seul organe d'assemblage, de bloquer simultanément en position chacun des profilés en croix.

Suivant une première caractéristique, il est constitué par deux éléments du type hermaphrodite avec chacun deux faces adjacentes perpendiculaires, un dégagement étant formé à la partie supérieure de chaque élément parallèlement à l'une des faces, tandis qu'un autre dégagement est formé à la partie inférieure parallèlement à l'autre face ; chacun des dits dégagements est conformé pour faire office de berceau d'appui de centrage et de retenue des tubes, après assemblage de deux éléments de raccords homologues ; une portée plane d'appui et de centrage étant formée verticalement entre chacun des dégagements perpendiculaires, selon un angle de quarante cinq degrés par rapport à chacune des faces perpendiculaires en constituant en combinaison avec les dits dégagements, des becs d'appui et de centrage autorisant l'accouplement par encastrement alterné de deux éléments de raccord homologue ; un trou débouchant percé perpendiculairement au plan d'appui et de centrage à quarante cinq degrés à partir de l'arête commune des deux faces perpendiculaires, autorise l'engagement et le positionnement d'un organe d'assemblage assurant le rapprochement et la liaison simultanée des deux éléments de raccords homologues.

Ces caractéristiques et d'autres encore ressortiront de la suite de la description.

Pour fixer l'objet de l'invention, sans toutefois le limiter, dans le dessin annexé :

La figure 1 est une vue en perspective des deux éléments selon l'invention, avant leur accouplement pour constituer un raccord.

La figure 2 est une vue en perspective d'un raccord selon l'invention montrant l'assemblage en croix de deux tubes que l'on a illustré en traits mixtes.

La figure 3 est une vue de face des deux éléments de raccords avant leur accouplement total.

Les figures 4 et 5 sont des vues en plan et en coupe respectivement considérées selon les lignes 4-4 et 5-5 de la figure 3.

La figure 6 est une vue de face semblable à la figure 3, après accouplement des deux éléments constituant le raccord.

Les figures 7 et 8 sont des vues en plan et en coupe respectivement considérées selon les lignes 7-7 et 8-8 de la figure 6.

Afin de rendre plus concret l'objet de l'invention, on le décrit maintenant d'une manière non limitative en se référant à l'exemple des figures du dessin.

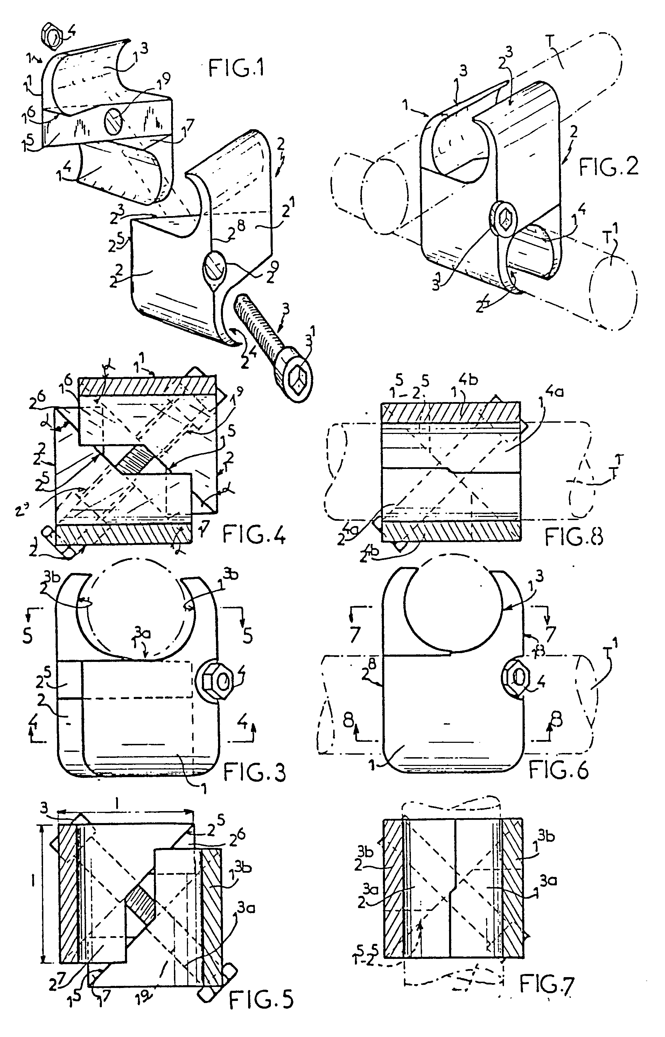

On voit figure 1 que le raccord selon l'invention, est constitué à partir de deux éléments du type hermaphrodite 1 et 2. Chaque élément 1 et 2 présente deux faces adjacentes perpendiculaires $1^1$-$1^2$ et $2^1$-$2^2$.

Un dégagement $1^3$-$2^3$ est formé à la partie supérieure de chaque élément 1 et 2, parallèlement à la face $1^1$ et $2^1$ par exemple ; un autre dégagement $1^4$-$2^4$ est formé à la partie inférieure, parallèlement à l'autre face $1^2$ et $2^2$. Chacun des dégagements $1^3$-$2^3$ et $1^4$-$2^4$ est conformé pour faire office de berceau d'appui, de centrage et de retenue des tubes T et $T^1$ après l'assemblage de deux éléments de raccords homologues 1 et 2 (figure 2).

Une portée plane d'appui et de centrage faisant office de plan de joint $1^5$-$2^5$ est formée verticalement entre chacun des dégagements perpendiculaires respectivement $1^3$ et $1^4$, $2^3$ et $2^4$.

Comme le montrent notamment les figures 1, 4 et 5, la portée plane d'appui $1^5$-$2^5$ est usinée suivant un angle $\alpha$ de quarante cinq degrés par rapport à chacune des faces $1^1$-$1^2$ et $2^1$-$2^2$ pour permettre l'assemblage rigoureusement perpendiculaire des deux éléments 1 et 2 (figures 2 et 8).

Il en résulte conséquemment que les longueurs 1 des deux faces adjacentes $1^1$ et $1^2$, $2^1$ et $2^2$ sont égales puisque faisant chacune un angle de quarante cinq degrés avec une face commune, en l'occurrence la surface plane d'appui $1^5$-$2^5$.

La section perpendiculaire à et délimitée par les deux faces perpendiculaires $1^1$ et $1^2$, $2^1$ et $2^2$, et la surface plane de centrage $1^5$-$2^5$, constitue

donc un triangle rectangle isocèle.

D'une manière importante, le positionnement angulaire de la portée plane d'appui $1^5$-$2^5$ constitue, à chaque extrémité, en combinaison avec respectivement l'un des dégagements $1^3$ et $1^4$, $2^3$ et $2^4$, des becs d'appui et de centrage $1^6$ et $1^7$, $2^6$ et $2^7$ (figures 1 et 4) pour autoriser l'accouplement par encastrement de deux éléments de raccords homologues 1 et 2, comme il est indiqué dans la suite de la description.

A partir de l'arête commune $1^8$-$2^8$ des deux faces perpendiculaires $1^1$ et $1^2$, $2^1$ et $2^2$, un trou débouchant $1^9$-$2^9$ est percé perpendiculairement au plan de joint $1^5$-$2^5$. Chaque trou $1^9$-$2^9$ permet l'engagement et le positionnement d'un organe d'assemblage 3 tel par exemple un ensemble vis-écrou, assurant la liaison des deux éléments de raccords homologues 1 et 2.

On voit figure 3 notamment que chaque dégagement $1^3$-$2^3$ et $1^4$-$2^4$ constitue transversalement une surface ou portée plane d'appui $1^{3a}$-$2^{3a}$ et $1^{4a}$-$2^{4a}$ se raccordant avec une surface ou portée cylindrique semi-circulaire $1^{3b}$-$2^{3b}$ et $1^{4b}$-$2^{4b}$ faisant office de berceau pour enserrer partiellement la section extérieure des tubes T (figure 2) après rapprochement angulaire de chaque élément de raccord 1 et 2.

Chaque bec d'appui et de centrage $1^6$ et $1^7$-$2^6$ et $2^7$, est respectivement formé en débordement horizontal à l'une des extrémités de la surface plane d'appui $1^5$-$2^5$ de manière à ce que les dits becs $1^6$ et $1^7$-$2^6$ et $2^7$ soient opposés par rapport au plan vertical de la dite surface plane d'appui $1^5$-$2^5$. Ces dispositions permettent le centrage et le positionnement angulaire des deux éléments homologues 1 et 2.

On a illustré aux figures 4 à 8, l'utilisation du raccord selon l'invention pour l'assemblage en croix des deux tubes T et T1.

A cet effet, on dispose en regard les deux éléments rigoureusement identiques 1 et 2 et on engage dans le trou débouchant $1^9$-$2^9$ l'organe d'assemblage 3. Les deux portées planes d'appui et de centrage $1^5$-$2^5$ sont donc positionnées parallèlement en regard l'une de l'autre de par leur usinage à quarante-cinq degrés combiné avec le positionnement du trou de passage $1^9$-$2^9$ de l'organe d'assemblage 3. Il est alors possible d'engager les tubes T et T1 dans chaque berceau d'appui constitué par le positionnement facial des dégagements $1^3$-$2^3$ et $1^4$-$2^4$ (figure 3). Les tubes T et T1 sont d'ores et déjà positionnés en croix, en faisant entre eux un angle de quatre vingt dix degrés, et en étant décalés en hauteur suivant une distance d correspondant à la surface plane d'appui $1^7$-$2^7$.

On voit également que les becs de centrage $1^6$-$1^7$ et $2^6$-$2^7$ viennent respectivement se positionner en alternance en appui sur les parties planes des dégagements perpendiculaires opposés $1^3$ et $1^4$-$2^3$ et $2^4$, de part et d'autre de la surface plane d'appui et de positionnement $1^5$-$2^5$. Il suffit ensuite d'agir sur l'organe de manœuvre 3 pour finir d'opérer le rapprochement angulaire de chaque élément de raccord 1 et 2, ce qui a pour effet de serrer simultanément les deux tubes T et T1 (figures 6, 7 et 8) par raison de symétrie des dégagements perpendiculaires $1^3$-$2^3$ et $1^4$-$2^4$, par rapport au plan vertical oblique défini par les surfaces planes de centrage à quarante-cinq degrés.

Dans le cas où l'assemblage des deux éléments 1 et 2 s'effectue par un système vis-écrou (figures du dessin) la tête de vis $3^1$ et l'écrou 4 peuvent être noyés dans des évidements correspondants, formés axialement à l'arête commune des faces équerrées $1^1$ et $1^2$-$2^1$ et $2^2$ (figures 1 et 2).

Il est bien évident que le dimensionnement de chaque dégagement $1^3$-$2^3$ et $1^4$-$2^4$ formant berceau d'appui, de centrage et de serrage, est fonction du diamètre des tubes à assembler. Ce dimensionnement concerne plus particulièrement la longueur de chaque surface plane d'appui $1^{3a}$-$2^{3a}$ et $1^{4a}$-$2^{4a}$ et le rayon de courbure des surfaces cylindriques semi-circulaires $1^{3b}$-$2^{3b}$ et $1^{4b}$-$2^{4b}$.

On note toutefois que les dispositions des raccords selon l'invention permettent l'utilisation de tubes susceptibles de légers écarts dimensionnels en diamètre, d'autant que le jeu entre la vis de serrage et son logement est important.

Les applications d'un ou de plusieurs raccords selon l'invention sont très nombreuses et variées. A titre d'exemple indicatif nullement limitatif on peut citer les nœuds de charpente métallique, les échafaudages, les rayonnages, ou toutes autres constructions spéciales d'ossature tubulaire. On peut également prévoir l'application de ces raccords selon l'invention pour les cycles notamment pour constituer la potence.

Les avantages ressortent bien de la description en particulier on souligne :

— la facilité d'adaptation sur les tubes à assembler car il n'est pas nécessaire d'engager le raccord à partir de l'une des extrémités du tube mais il suffit de coiffer la section du tube à l'endroit de raccordement désiré. Il en résulte conséquemment un gain de temps et la suppression du risque de détérioration des tubes ;

— la rapidité de serrage des tubes au moyen d'un seul organe d'assemblage pour bloquer simultanément en position chacun des tubes ;

— la facilité d'exécution, les deux éléments composant les raccords étant identiques et susceptibles d'être obtenus directement par moulage en étant réalisés en toute matière ou matériau désiré ;

— il est bien évident que ces raccords peuvent correspondre à toutes sections de tubes, de mêmes ou de dimensions différentes.

On voit également que la hauteur des dégagements équerrés $1^3$ et $1^4$-$2^3$ et $2^4$ est fonction du diamètre des tubes, de manière à ce qu'après l'assemblage et l'accouplement des éléments 1 et 2, les portées semi-circulaires $1^{3b}$-$2^{3b}$-$1^{4b}$-$2^{4b}$ de chaque dégagement correspondant n'enserrent pas totalement la section des tubes T et T¹ (figure 6) pour conserver une partie totalement lisse desdits tubes, sans aucune aspérité. Ces dispositions peuvent s'avérer particulièrement intéressantes pour certaines applications spécifiques.

## Revendications

1. Raccord pour l'assemblage à quatre-vingt-dix degrés, notamment d'organes tubulaires de section ronde, constitué par deux éléments (1) et (2) du type hermaphrodite avec chacun deux faces adjacentes perpendiculaires ($1^1$ et $1^2$)-($2^1$ et $2^2$), un dégagement ($1^3$-$2^3$) étant formé à la partie supérieure de chaque élément (1)-(2) parallèlement à l'une des faces ($1^1$-$2^1$), tandis qu'un autre dégagement ($1^4$-$2^4$) est formé à la partie inférieure parallèlement à l'autre face ($1^2$-$2^2$) et perpendiculairement au premier dégagement, chacun desdits dégagements ($1^3$-$2^3$) et ($1^4$-$2^4$) étant conformé pour faire office de berceau d'appui de centrage et de retenue des tubes, après assemblage de deux éléments de raccords homologues (1) et (2), caractérisé en ce qu'une portée plane d'appui et de centrage ($1^5$-$2^5$) est formée verticalement entre chacun des dégagements perpendiculaires ($1^3$ et $1^4$)-($2^3$ et $2^4$) selon un angle de quarante-cinq degrés par rapport à chacune des faces perpendiculaires ($1^1$ et $1^2$)-($2^1$-$2^2$) en constituant en combinaison avec lesdits dégagements, des becs d'appui et de centrage ($1^6$ et $1^7$)-($2^6$-$2^7$) autorisant l'accouplement par encastrement alterné de deux éléments de raccord homologues (1 et 2), et en ce qu'un trou débouchant ($1^9$)-($2^9$) percé perpendiculairement au plan d'appui et de centrage à quarante cinq degrés ($1^5$-$2^5$) à partir de l'arête commune ($1^8$-$2^8$) des deux faces perpendiculaires, autorise l'engagement et le positionnement d'un organe d'assemblage (3) assurant le rapprochement et la liaison simultanée des deux éléments de raccords homologues (1 et 2).

2. Raccord selon la revendication 1, caractérisé en ce que chaque dégagement ($1^3$-$2^3$) et ($1^4$-$2^4$) constitue transversalement une surface plane d'appui ($1^{3a}$-$2^{3a}$) et ($1^{4a}$-$2^{4a}$) se raccordant avec une surface cylindrique semi-circulaire ($1^{3b}$-$2^{3b}$) et ($1^{4b}$-$2^{4b}$) faisant office de berceau pour enserrer partiellement la section extérieure des tubes après rapprochement angulaire de chaque élément de raccord (1 et 2).

3. Raccord selon l'une quelconque des revendications 1 et 2, caractérisé en ce que chaque bec d'appui et de centrage ($1^6$-$1^7$)-($2^6$ et $2^7$) est respectivement formé en débordement horizontal à l'une des extrémités de la surface verticale oblique de centrage ($1^5$-$2^5$), de sorte que lesdits becs ($1^6$ et $1^7$)-($2^6$-$2^7$) soient opposés par rapport au plan vertical de ladite surface ($1^5$-$2^5$) pour qu'ils viennent respectivement se positionner en alternance lors de l'assemblage de deux éléments (1 et 2) en appui sur les parties planes ($1^{3a}$-$2^{3a}$) et ($1^{4a}$-$2^{4a}$) des dégagements perpendiculaires opposés ($1^3$-$1^4$)-($2^3$-$2^4$), de part et d'autre de la surface plane d'appui et de positionnement ($1^5$-$2^5$).

4. Raccord selon l'une quelconque des revendications 1, 2 et 3, caractérisé en ce que la section perpendiculaire à et délimitée par les deux faces perpendiculaires ($1^1$-$1^2$)-($2^1$-$2^2$) et la surface plane de centrage ($1^5$-$2^5$) constitue un triangle rectangle isocèle.

5. Raccord selon l'une quelconque des revendications 1, 2, 3 et 4, caractérisé en ce que chaque élément (1-2) est obtenu directement par moulage.

## Claims

1. Connector for assembling at an angle of 90° more particularly tubular organs of rounded cross-section consisting of two elements (1) and (2) of the hermaphroditic type with each one two normal adjacent faces ($1^1$ and $1^2$)-($2^1$ and $2^2$), a clearance ($1^3$-$2^3$) being formed at the upper portion of each element (1)-(2) parallel to one of the faces ($1^1$-$2^1$), while a further clearance ($1^4$-$2^4$) is formed at the lower portion parallel to the other face ($1^2$-$2^2$) and normal to the first clearance ($1^3$-$2^3$), each one of said clearances ($1^3$-$2^3$) and ($1^4$-$2^4$) being made to serve as a centering and holding retaining cradle for the tubes after the assembly of two homologous connector elements (1) and (2), characterized in that a plane abutment and centering supporting face ($1^5$-$2^5$) is formed vertically between each one of the normal clearances ($1^3$ and $1^4$)-($2^3$ and $2^4$) according to an angle of 45° relative to each one of the normal faces ($1^1$-$1^2$) and ($2^1$-$2^2$), whereby in combination with said clearances there are formed abutment and centering noses ($1^6$-$1^7$) and ($2^6$-$2^7$) for the coupling by fitting in alternately of two homologous connector elements (1 and 2), and in that an emerging hole ($1^9$)-($2^9$) bored normal to the abutment and centering plane at 45° ($1^5$-$2^5$) from the common ridge ($1^8$-$2^8$) of the two normal faces permits the engagement and the positioning of an assembly organ (3) while allowing the two homologous connector elements (1 and 2) to be brought together and connected simultaneously.

2. Connector as claimed in Claim 1, characterized in that each clearance ($1^3$-$2^3$) and ($1^4$-$2^4$) constitutes transversely a plane abutting surface ($1^{3a}$-$2^{3a}$) and ($1^{4a}$-$2^{4a}$) connecting with a half-circular cylindrical surface ($1^{3b}$-$2^{3b}$) and ($1^{4b}$-$2^{4b}$) serving as a cradle for clamping partially the external cross section of the tubes after each connector element (1 and 2) has been brought together angularly.

3. Connector as claimed in any one of Claims 1 and 2, characterized in that each abutment and centering nose ($1^6$-$1^7$)-($2^6$-$2^7$) is respectively formed in horizontal projection at one of the ends of the centering slanting vertical surface ($1^5$-$2^5$), so that said noses ($1^6$ and $1^7$)-($2^6$-$2^7$) will be opposite relative to the vertical plane of said surface ($1^5$-$2^5$) in order to be positioned respectively and alternately, when two elements (1 and 2) are assembled, in abutment on the plane portions ($1^{3a}$-$2^{3a}$) and ($1^{4a}$-$2^{4a}$) of the opposite normal clearances ($1^3$-$1^4$)-($2^3$-$2^4$), on either side of the abutment and positioning plane surface ($1^5$-$2^5$).

4. Connector as claimed in any one of Claims 1, 2 and 3, characterized in that the normal section defined by the two normal faces ($1^1$-$1^2$)-($2^1$-$2^2$) and the plane centering surface ($1^5$-$2^5$) constitutes an isosceles right-angled triangle.

5. Connector as claimed in any one of Claims 1, 2, 3 and 4, characterized in that each element ($1$-$2$) is obtained directly by molding.

**Ansprüche**

1. Aus zwei Elementen (1) und (2) zweigeschlechtlicher Art mit je zwei senkrechten anliegenden Flächen ($1^1$ und $1^2$)-($2^1$ und $2^2$) bestehendes Verbindungsstück zum Zusammenfügen auf 180° von insbesondere rohrförmigen Organen mit abgerundem Querschnitt, mit einem am Oberteil jedes Elements (1)-(2) parallel zu der einen der Flächen ($1^1$-$1^2$) gebildeten Spielraum ($1^3$-$2^3$), und einem weiteren, am Unterteil parallel zu der anderen Fläche ($1^2$-$2^2$) und senkrecht zum ersten Spielraum ($1^3$-$2^3$) gebildeten Spielraum ($1^4$-$2^4$), wobei jeder Spielraum ($1^3$-$2^3$) bzw. ($1^4$-$2^4$) als eine Mulde zur Zentrierabstützung und zum Halten der rohrförmigen Organe nach Zusammenfügen zweier homologen Verbindungsstückelemente (1) und (2) gestaltet wird, dadurch gekennzeichnet, dass ein flacher Abstützungs- und Zentrieruntersatz ($1^5$-$2^5$) zwischen jedem der senkrechten Spielräume ($1^3$-$1^4$) und ($2^3$-$2^4$) nach einem Winkel von 45° in bezug auf jede der der senkrechten Flächen ($1^1$-$1^2$) und ($2^1$-$2^2$) vertikal gebildet wird, mit entsprechender, mit den besagten Spielräumen kombinierten Bildung von Abstützungs- und Zentriernasen ($1^6$ und $1^7$)-($2^6$ und $2^7$) zur Kupplung durch wechselweises Einfügen von zwei homologen Verbindungsstückelementen (1 und 2) ; und dass ein mündendes, senkrecht zur Abstützungs- und Zentrierebene von 45° ($1^5$-$2^5$) von der gemeinsamen Kante ($1^8$-

$2^8$) der zwei senkrechten Flächen aus gebohrtes Loch ($1^9$-$2^9$) das Einsetzen und die Positionierung eines Verkupplungsorgans (3) zum Annähern und zur gleichzeitigen Verbindung der zwei homologen Verbindungsstücke (1 und 2) ermöglicht.

2. Verbindungsstück nach Anspruch 1, dadurch gekennzeichnet, dass jeder Spielraum ($1^3$-$2^3$) und ($1^4$-$2^4$) eine abgeflachte Abstützungsfläche ($1^{3a}$-$2^{3a}$) und ($1^{4a}$-$2^{4a}$) in die Quere bildet, die sich mit einer halbkreisförmigen zylindrischen Oberfläche ($1^{3b}$-$2^{3b}$) und ($1^{4b}$-$2^{4b}$) verbindet, die als eine Mulde zum teilweisen Einspannen des Ausserquerschnitts der rohrförmigen Organe nach der winkeligen Annäherung jedes Verbindungsstückelements (1 und 2) dient.

3. Verbindungsstück nach einem der Ansprüche 1 und 2, dadurch gekennzeichnet, dass jede Abstützungs- und Zentriernase ($1^6$-$1^7$) und ($2^6$-$2^7$) waagerecht hervorragend bei einem der Enden der abgeschrägten vertikalen Zentrieroberfläche ($1^5$-$2^5$) gebildet wird, sodass die besagten Nasen ($1^6$ und $1^7$)-($2^6$-$2^7$) sich versetzt in bezug auf die Vertikalebene der besagten Oberfläche ($1^5$-$2^5$) befinden, damit sie bei der Verbindung zweier Elemente (1 und 2) beziehungsweise und abwechselnd auf die Flachteile ($1^{3a}$-$2^{3a}$) und ($1^{4a}$-$2^{4a}$) der entgegengesetzten senkrechten Spielräume ($1^3$-$1^4$)-($2^3$-$2^4$) beiderseitig der abgeflachten Abstützungs- und Positionierungsoberfläche ($1^5$-$2^5$) eingerichtet werden.

4. Verbindungsstück nach einem der Ansprüche 1, 2 und 3, dadurch gekennzeichnet, dass der durch die zwei senkrechten Flächen ($1^1$-$1^2$)-($2^1$-$2^2$) und die abgeflachte Zentrierungsfläche ($1^5$-$2^5$) abgegrenzte senkrechte Querschnitt ein gleichschenkeliges rechtwinklige Dreieck bildet.

5. Verbindungsstück nach einem der Ansprüche 1, 2, 3 und 4, dadurch gekennzeichnet, dass jedes element (1-2) unmittelbar durch Formpressen hergestellt wird.

FIG.1

FIG.2

FIG.4

FIG.8

FIG.3

FIG.6

FIG.5

FIG.7